# EUROPÄISCHE PATENTANMELDUNG

(11) **EP 2 770 085 A1**
(43) Veröffentlichungstag der Anmeldung: **27.08.2014**
(21) Anmeldenummer: 13156793.5
(22) Anmeldetag: 26.02.2013
(51) Int. Cl.: C23C 22/74

(54) **Aluminiumhaltige Schutzschicht gegen Korrosion und Erosion**

(71) Anmelder: Siemens Aktiengesellschaft, 80333 München (DE)
(72) Erfinder: Barnikel, Jochen, 45470 Mühlheim an der Ruhr (DE); Ghicov, Andrei, 45478 Mühlheim an der Ruhr (DE); Krug, Peter, 42555 Velbert (DE); Schmitz, Friedhelm, 46537 Dinslaken (DE)

(57) **Zusammenfassung**

Durch die Verwendung von ausscheidungsgehärteten Partikeln kann sowohl die Korrosion als auch die Erosionseigenschaften eines Schichtsystems verbessert werden.

## Beschreibung

Die Erfindung betrifft eine aluminiumhaltige Schutzschicht gegen Korrosion und Erosion.

Verdichter-Schaufeln von stationären GT und Flugturbinen werden meist auf der Basis von vergüteten martensitischen 12% - 13%Cr-Stähle und zum Teil ausscheidungsgehärteten 16% - 17%Cr-Stähle hergestellt. Als Schutz gegen Korrosion werden die Schaufeln der vorderen Stufen mit einem speziellen Aluminium-pigmenthaltigen Hochtemperaturlack geschützt.

Der Nachteil dieser Beschichtung besteht in der relativ geringen Erosionsbeständigkeit der Schicht. Als Folge davon ist neben einer sehr aufwändigen Filterung der Luft oft auch eine regelmäßige Neubeschichtung der Schaufeln (im Refurbishment) notwendig.

Zur Lösung dieses Problems werden die zurzeit verwendeten Schutzschichten in regelmäßigen Intervallen auf Erosionsabtrag und Korrosionsschutz inspiziert und im Refurbishment wird eine Entschichtung mit anschließender Neubeschichtung der Schaufeln mit dem gleichen System durchgeführt. Der Zeitraum dieser Intervalle ist stark von der Umgebungsluft und der Wirksamkeit von Filtereinrichtungen abhängig.

Dieses Problem soll gelöst werden.

Die Aufgabe wird gelöst durch ein Schichtsystem gemäß Anspruch 1.

Durch eine Erhöhung des Erosionswiderstandes der Beschichtung könnten die Refurbishment-Intervalle verlängert werden.

In den Unteransprüchen sind weitere vorteilhafte Maßnahmen aufgelistet, die beliebig miteinander kombiniert werden können um weitere Vorteile zu erzielen.

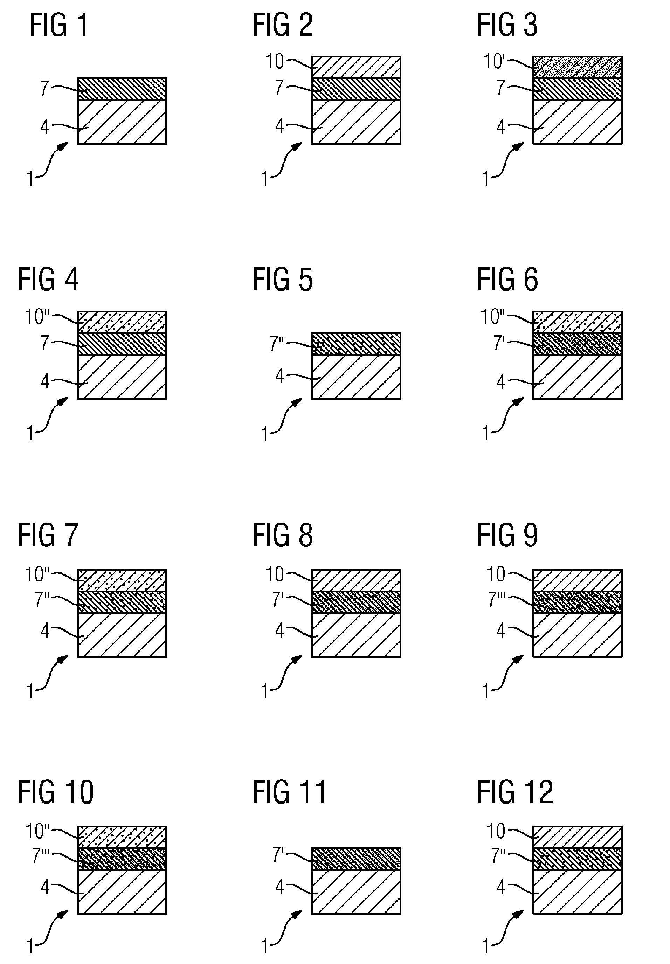

Es zeigen Figuren 1 - 28 Schichtsysteme.

Die Figuren und die Beschreibung stellen nur Ausführungsbeispiele der Erfindung dar.

Figur 1 zeigt ein Schichtsystem 1 aus einem Substrat 4 mit einer einzigen Schicht 7, die weiche Aluminiumpartikel Al mit einer Härte ≤ Hv50 enthält.
Vorzugsweise sind das härtere aluminiumhaltige Partikel AL* in einer Schicht 7' (Fig. 11).

Die einlagige Schicht 7" ausgehend von Figur 1 kann vorzugsweise zusätzlich noch Hartstoffpartikel (H) aufweisen, wie es in Figur 5 dargestellt ist.

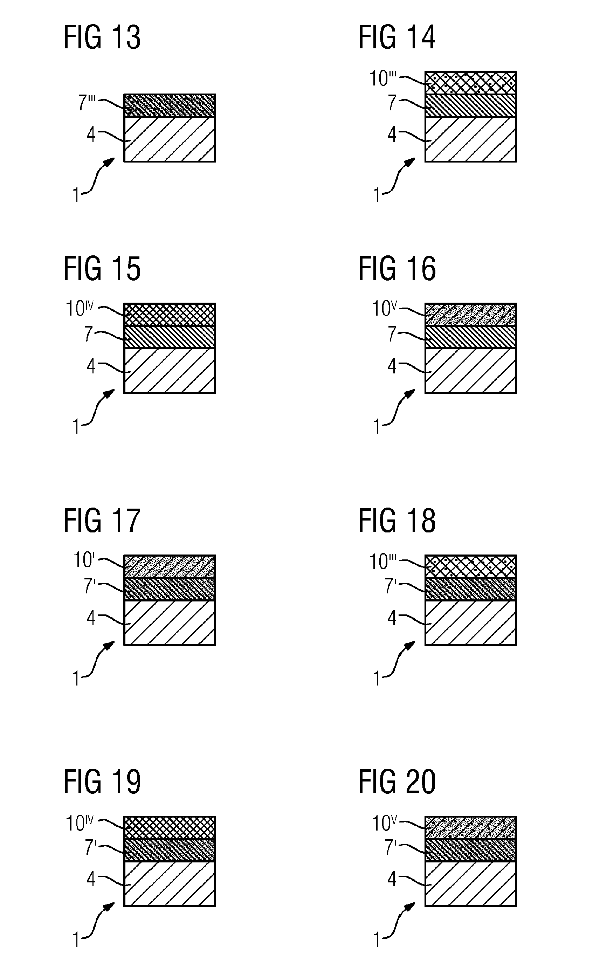

Dies gilt ebenso für eine einlagige Schicht 7"' gemäß Figur 13 ausgehend von Figur 11.

Figur 2 zeigt ein Schichtsystem 1 aus einem Substrat 4 mit einer zweilagigen Schutzschicht 7, 10 gegen Korrosion und Erosion (entspricht Figur 1 + äußere Schicht 10).
Nach diesem Stand der Technik weist die Schicht 7, die direkt auf dem stahlhaltigen Substrat 4 aufliegt, weiche Aluminiumpartikel Al auf und wirkt als Opferanode, wobei die obere Schicht 10 aber keine Aluminiumpartikel aufweist.
In Figur 2 sind in der unteren Schichten 7 die weichen Aluminiumpartikel Al vorhanden und die obere Schicht 10 weist keine Partikel auf, sondern nur ein Matrixmaterial.

Figur 8 stellt Figur 2 für härtere aluminiumhaltige Partikel AL* in der unteren Schicht 7' dar.

Zur Steigerung der Erosionsbeständigkeit können ausgehend von Figur 2 bzw. Figur 8 nur in der äußeren Schicht 10" ausschließlich Hartstoffpartikel H vorhanden sein, wie es in Figur 4 bzw. Figur 6 dargestellt ist.

Ein weiteres Ausführungsbeispiel der Erfindung besteht darin, in beide Schichten Aluminium einzubringen (Fig. 3), wobei jedoch in die untere Schicht 7 weichere Aluminiumpartikel Al ("reines" Aluminium) vorhanden ist und in der oberen Schicht 10' härtere aluminiumhaltige Partikel AL* vorhanden sind.

Je nach Anwendungsgebiet können in den unteren Schichten 7" bzw. 7"' und in der oberen Schicht 10', 10" gemäß Figur 7 ausgehend von Figur 2 bzw. gemäß Figur 10 (ausgehend von Fig. 8) oder nur in der oberen Schicht 10" (Fig. 4, 6) oder gemäß Figur 9 ausgehend von Figur 8 und gemäß Figur 12 ausgehend von Figur 2 nur in der unteren Schicht 7"', 7" Hartstoffpartikel H eingelagert sein.

Darüber hinaus kann die obere Schicht mit weichen Aluminiumpartikeln Al, härteren, aluminiumhaltigen Partikeln AL* und/oder Hartstoffpartikeln H ausgestaltet werden oder die obere Schicht 10^{IV} kann nur weiche Aluminiumpartikel aus Aluminium aufweisen oder die obere Schicht 10^{V} weist sowohl Hartstoffpartikel H als auch härtere aluminiumhaltige Partikel AL* auf.

In Figur 14 weist die untere Schicht 7 weiche Aluminiumpartikel Al und die obere Schicht 10"' ebenso aber auch Hartstoffpartikel H als Erosionsschutz auf.

In Figur 15 weist sowohl die untere Schicht 7 als auch die obere Schicht 10 ^{IV} Aluminiumpartikel auf, wobei in der äußeren Schicht 10^{IV} die Aluminiumpartikel zur Steigerung der Erosion genutzt werden, auch wenn sie in geringerem Maße zur Erosionsschutz dienen als Hartstoffpartikel.

In Figur 16 weist die untere Schicht 7 weiche Aluminiumpartikel Al auf und die obere Schicht 10^{V} härtere aluminiumhaltige Partikel AL* und Hartstoffpartikel H.

Figur 17 weist ausgehend von Figur 3 für die untere Schicht 7' keine Aluminiumpartikel auf, sondern härtere Aluminiumpartikel AL*.

Figur 18 zeigt eine untere Schicht 7' mit härteren aluminiumhaltigen Partikeln Al*, auf der eine obere Schicht 10"' mit weichen Aluminiumpartikeln Al und Hartstoffpartikel H aufgebracht ist.

In Figur 19 weist die untere Schicht 7' härtere aluminiumhaltige Partikel AL* auf, die dann zum Erosionsschutz beitragen, wenn die obere Schicht 10^{IV} abgetragen ist, da die obere Schicht 10^{IV} nur Aluminiumpartikel enthält.

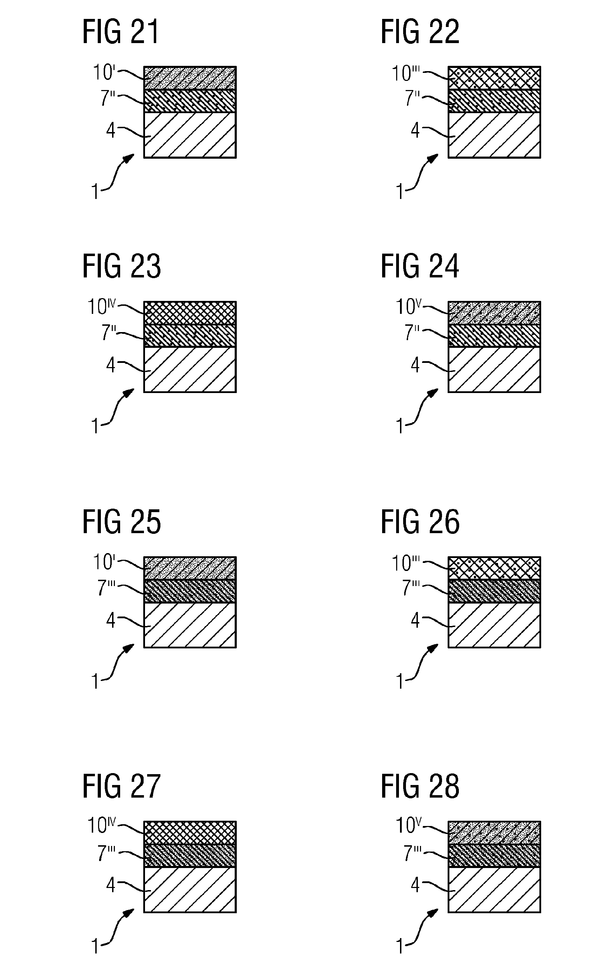

Den härtesten Erosionsschutz bildet eine obere Schicht 10^{V}, bei der härtere Aluminiumpartikel AL* und Hartstoffpartikel vorhanden sind, wobei je nach Anwendungsgebiet und Grad des Erosionsschutzes in der unteren Schicht 7' härtere Aluminiumpartikel AL* vorhanden sind (Fig. 20) oder in der unteren Schicht auch noch zusätzlich Hartstoffpartikel enthalten sind (Figur 28).

In Figur 21 - 24 weist die untere Schicht 7" Aluminiumpartikel und Hartstoffpartikeln H auf, um den Erosionswiderstand der unteren Schicht 7" zu steigern.

In Figur 21 sind härtere aluminiumhaltige Partikel AL* in der oberen Schicht 10' vorhanden, um sowohl zum Korrosionsschutz als auch zum Erosionsschutz beizutragen.

In Figur 22 wird das in der oberen Schicht 10"' mit weichen Aluminiumpartikeln Al und Hartstoffpartikeln H erreicht.

In weniger erosionsbelasteten Umgebungen, kann die obere Schicht 10^{IV} im Vergleich zu Figur 22 auch nur Aluminiumpartikel aufweisen (Figur 23).

Durch die obere Schicht 10^{V} mit aluminiumhaltigen härteren Partikeln Al* und Hartstoffpartikeln H wird insbesondere die äußere Schicht vor Erosion geschützt (Figur 24).

In den Figuren 25 - 28 weist die untere Schicht 7"' härtere aluminiumhaltige Partikel AL* und Hartstoffpartikel H auf, um das Substrat 4 auf jeden Fall vor Erosion zu schützen, wobei in Figur 25 in der oberen Schicht 10' härtere aluminiumhaltige Partikel AL* vorhanden sind und in Figur 26 der Erosionsschutz aber auch durch Hartstoffpartikel in der aluminiumhaltigen Schicht 10"' gewährleistet wird.

Figur 27 zeigt eine obere Schicht 10^{IV}, die weiche Aluminiumpartikel Al aufweist, die insbesondere auch zum Korrosionsschutz beiträgt und nur wenn die obere Schicht abgetragen ist die untere Schicht sowohl den Korrosionsschutz als auch den Erosionsschutz gewährleistet.

Als Hartstoffpartikel H können Keramikpartikel, vorzugsweise Aluminiumnitrid und Bornitrid, Chromkarbid, Aluminiumoxid oder Mischungen daraus verwendet werden.

Das Substrat 4 (Fig. 1 - 28) weist vorzugsweise einen Stahl auf.

Die erfindungsgemäße Steigerung der Erosion erfolgt durch Verwendung von härteren, aluminiumhaltigen Partikeln AL* aus einer Aluminiumlegierung, insbesondere ausscheidungsgehärteten Aluminiumlegierung, die eine 5-10-fach höhere Härte und einem mindestens Faktor 5 höhere Festigkeit aufweisen:
- Legierungen auf Basis Al-Mn, optional mit geringen Gehalten von 0% bis zu 1,5 Gew.-% an Magnesium (Mg) oder Kupfer (Cu), insbesondere AlMn1, AlMn1Cu, - zweiphasigen Legierungen auf der Basis einer übereutektischen Al-Si-Legierung, insbesondere AlSi20 bis AlSi35
- dispersoidgehärtete Legierung auf der Basis Al-Mg-Mn-Si, bei der das Magnesium (Mg) überwiegend als Mg₂Si abgebunden ist,
- dispersoidgehärtete Legierungen auf Basis Al-Fe-Ni,
- Kombination aus zweiphasigem Gefüge und Dispersoidverfestigung mit Eisen (Fe) und Nickel (Ni), insbesondere AlSi20Fe5Ni2.

Vorzugsweise können als ausscheidungshärtende Legierungen aus Aluminium und zumindest einem Element der Gruppe Zn, Mg, Cu, Mn, Co insbesondere folgende Legierungen verwendet werden: Al-Zn, Al-Zn-Mn, Al-Mn-SC, Al-Mg-Mn, Al-Mg-Zn-Cu, Al-Cu-Mn-Zn, AlZn4, 5Mg1, AIZnMgCu1,5, AlZnMgCu0,5, AlMg4, 5Mn.
Es können aber auch Legierungen mit deutlich höheren Gehalten verschiedener Legierungselemente zur Anwendung gekommen, wie z.B. mit 6% - 8% Zink (Zn).

Ebenso vorzugsweise werden verwendet:
- Partikel AL* aus Aluminium-Verbundwerkstoffe aus Aluminium oder einer Aluminiumlegierung als Matrix: Al-Si, Al-Si-Mg, Al-Mn, Al-Fe, Al-Ni, Al-Zn mit einer eingelagerten zweiten Komponente, wie keramische Teilchen aus Al₂O₃ oder SiC
- Dispersionshärtende Aluminiumwerkstoffe mit Oxiden, Karbiden oder Nitriden (Al₂O₃, Al₄C₃) mit Lithium (Li) oder durch intermetallische Phasen: AlFe₈Co, AlFe₈Ce₄, AlFe₈Zr₁,
- Aluminide: insbesondere NiAl, Ni₃Al, FeAl, Fe₃Al, TiAl, Ti₃Al,
- Ausscheidungshärtende scandiumhaltige (Sc) Aluminiumlegierung Al-Sc oder Al-Sc-X-Legierungen,

Die Partikel AL* weisen eine Legierung auf oder es gibt Partikel AL* aus verschiedenen Legierungen, in den Schichten 7, ..., 10^{V}, wobei ein einzelnes Partikel AL* vorzugsweise jedoch nur eine Legierung aufweist.

Nach dem Einbrennen der Aluminiumpigmentschicht erfolgt in der Regel ein Leitfähigkeitsstrahlen mit geringer Intensität. Durch gezieltes Druckstrahlen mit optimierten Parametern lässt sich hingegen zusätzlich eine Härtesteigerung von Aluminiumpartikeln erzielen.

Das Matrixmaterial der Schichten 7, 7', 7", 7"', 10, 10', 10", 10"', 10^{IV}, 10^{V} (Fig. 1 - 28) ist vorzugsweise in Chromat-Phospat-Binder und vorzugsweise für beide Schichten gleich.

## Patentansprüche

1. Schichtsystem (1),
das zumindest aufweist:
ein Substrat (4),
eine untere Schicht (7, 7', 7", 7"'),
die auf dem Substrat (4),
insbesondere direkt auf dem Substrat (4),
vorhanden ist,
optional eine äußere Schicht (10, 10', 10", 10"', 10^{IV}, 10^{V}) auf der unteren Schicht (7, 7', 7", 7"'),
wobei in dem Schichtsystem (1) Partikel aus Aluminium (Al) mit einer weichen Härte vorhanden ist,
insbesondere mit einer Härte bis zu Hv50.
**dadurch gekennzeichnet,**
**dass** die Schicht (7, 7', 7", 7"', 10, 10', 10", 10"', 10^{IV}, 10^{V})
aluminiumhaltige Partikel (AL*) aufweist,
die härter ausgebildet sind als die Partikel aus Aluminium (Al),
**dass** die aluminiumhaltigen Partikel (AL*) eine Aluminiumlegierung oder
Aluminium mit einem Härtungsmechanismus,
insbesondere eine ausscheidungshärtende Aluminiumlegierung,
aufweisen, insbesondere daraus bestehen,
wobei die Aluminiumlegierung vorzugsweise ausgewählt wird aus:
- Legierungen auf Basis Al-Mn,
optional mit geringen Gehalten von 0% bis zu 1,5 Gew.-% an Magnesium (Mg) oder Kupfer (Cu),
insbesondere AlMn1, AlMn1Cu,
- zweiphasigen Legierungen auf der Basis einer übereutektischen Al-Si-Legierung,
insbesondere AlSi20 bis AlSi35
- dispersoidgehärtete Legierung auf der Basis Al-Mg-Mn-Si,
bei der das Magnesium (Mg) überwiegend als Mg₂Si abgebunden ist,
- dispersoidgehärtete Legierungen auf Basis Al-Fe-Ni,
- Kombination aus zweiphasigem Gefüge und Dispersoidverfestigung mit Eisen (Fe) und Nickel (Ni), insbesondere AlSi20Fe5Ni2
und optional
- Aluminium-Zink (Al-Zn)
- Aluminium-Zink-Mangan (Al-Zn-Mn)
- Aluminium-Mangan-Scandium (Al-Mn-Sc)
- Aluminium-Magnesium-Mangan (Al-Mg-Mn)
- Aluminium-Magnesium-Zink-Kupfer (Al-Mg-Zn-Cu)
- Aluminium-Magnesium-Zink-Kupfer-Kobalt (Al-Mg-Zn-Cu-Co)
- Legierungen von Aluminium-Kupfer-Mangan-Zink (Al-Cu-Mn-Zn)
- Al₃Li
- AlZn4, 5Mg1
- AlZnMgCu1,5
- AlZnMgCu0,5
- AlMg4,5Mn.

2. Schichtsystem nach Anspruch 1,
das nur eine untere Schicht (7, 7', 7", 7"') aufweist.

3. Schichtsystem nach einem oder beiden der Ansprüche 1 oder 2,
das zumindest aufweist:
eine untere Schicht (7, 7', 7", 7"') und
eine äußere Schicht (10, 10', 10", 10"', 10^{IV}, 10^{V}),
insbesondere nur eine untere (7, 7', 7", 7"') und nur eine äußere Schicht (10, 10', 10", 10"', 10^{IV}, 10^{V}).

4. Schichtsystem nach Anspruch 3,
bei dem in der unteren Schicht (7) weiche Aluminiumpartikel (AL),
insbesondere mit einer maximalen Härte von Hv50, vorhanden sind und
in der oberen Schicht (10', 10^{V})
um mindestens 10% härtere Aluminiumpartikel (AL*), insbesondere ausscheidungshärtende Aluminiumlegierungspartikel (AL*) vorhanden sind.

5. Schichtsystem nach einem oder mehreren der Ansprüche 1 bis 4,
bei dem in der unteren Schicht (7", 7"') Hartstoffpartikel (H) vorhanden sind.

6. Schichtsystem nach einem oder mehreren der Ansprüche 1 bis 5,
wobei in der oberen Schicht (10", 10"', 10^{V}) Hartstoffpartikel (H) vorhanden sind.

7. Schichtsystem nach einem oder mehreren der Ansprüche 5 oder 6,
bei dem in beiden Schichten (7", 7"', 10", 10"', 10^{V}) Hartstoffpartikel (H) vorhanden sind.

8. Schichtsystem nach einem oder mehreren der Ansprüche 5, 6 oder 7,
bei dem als Hartstoffpartikel (H) Aluminiumnitrid, Bornitrid, Chromkarbid, Aluminiumoxid oder Mischungen daraus verwendet werden.

9. Schichtsystem nach einem oder mehreren der Ansprüche 1 bis 8,
bei dem die Schicht (7, 7', 7", 7"', 10, 10', 10", 10"', 10^{IV}, 10^{V}) oder beide Schichten (7,7', 7", 7"', 10, 10', 10", 10"', 10^{IV}, 10^{V}) das gleiche Matrixmaterial aufweisen,
insbesondere Chromatphosphatbinder.

10. Schichtsystem mit einem oder mehreren der vorherigen Ansprüche,
bei dem die obere Schicht (10) keine aluminiumhaltige Partikel (AL*) oder Aluminiumpartikel (AL) aufweist.

11. Schichtsystem nach einem oder mehreren der vorherigen Ansprüche,
bei dem das Substrat (4) ein Stahl aufweist.

12. Schichtsystem nach einem oder mehreren der vorherigen Ansprüche,
wobei die Aluminiumpartikel durch Leitfähigkeitsstrahlen, insbesondere durch Kaltfestigungsverfahren, wie z.B. Strahlen oder Rollieren, eine Härtesteigerung erfahren haben.

13. Schichtsystem nach einem oder mehreren der vorherigen Ansprüche,
bei dem die aluminiumhaltigen Partikel (Al*) nur eine Legierung aufweisen.

14. Schichtsystem nach einem oder mehreren der vorherigen Ansprüche,
bei dem aluminiumhaltige Partikel (AL*) aus verschiedenen Legierungen vorhanden sind,
wobei jeder Partikel (AL*) jedoch nur eine Legierung aufweist.
